# EUROPEAN PATENT APPLICATION

(11) **EP 2 093 190 A1**
(43) Date of publication of application: **26.08.2009**
(21) Application number: 07850193.9
(22) Date of filing: 06.12.2007
(51) Int. Cl.: C01B 31/02

(54) **METHOD FOR PRODUCTION OF NONRADIOACTIVE AND STABLE ISOTOPE OF CARBON HAVING MASS NUMBER OF 13**

(30) Priority: 12.12.2006 JP 2006357166
(71) Applicant: Sawada, Shigemi, Hokkaido 041-0836 (JP)
(72) Inventor: FUKUSHIMA, Hideo, Kodaira-shi Tokyo 184-0000 (JP); MIZUNO, Tadahiko, Sapporo-shi Hokkaido 065-0016 (JP)
(74) Representative: Patentanwälte Westphal, Mussgnug & Partner
(86) International application number: PCT/JP2007/073584
(87) International publication number: WO 2008/072546

(57) **Abstract**

Disclosed is a method for producing a nonradioactive and stable isotope ¹³C by using a widely-used hydrocarbon compound as a raw material without producing any radioactive waste. The method uses a carbon compound as a raw material, and comprises reacting the carbon compound in the presence of hydrogen, a sulfur compound and a reaction catalyst at 500 to 1000 °C, thereby producing ¹³C .

## Description

### Technical Field

The present invention relates to a method for producing ¹³C (nonradioactive and stable isotope of carbon having a mass number of 13), using a carbon compound as a raw material, and in particular, to a ¹³C producing method for yielding ¹³C, which is a nonradioactive and stable carbon isotope, at low temperature.

### Background Art

Hitherto, a method has been performed for yielding a very large nuclear fusion energy by heating deuterium and tritium at a 10⁸°C or higher and thus causing nuclear fusion reaction to generate helium and the like. This method has advantages that the raw materials are substantially exhaustless; the reaction does not advance recklessly in principle; no carbon dioxide is generated; a high-level radioactive waste is not produced; and other conveniences are provided.

Japanese Patent Application Laid-Open No. 8-211191 (Patent Document 1) discloses a technique of applying a large current of several thousand amperes to deuterium and tritium to generate plasma by arc discharge, thereby causing nuclear fusion reaction at a temperature of several tens of millions of degrees.

As described in Non-Patent Document 1, at present, nuclear fusion at room temperature is also being actively researched. However, this nuclear fusion is still at the stage of scientific study and has not arrived at an industrial level.

Patent Document 1: Japanese Patent Application Laid-Open No. 8-211191
Non-Patent Document 1: Akihito Takahashi at Osaka University, and Yasuhiro Iwamura at Mitsubishi Heavy Industries, Ltd., Journal of Atomic Energy Society of Japan, Vol. 47, No. 9 (2005), pp. 62-63

### Disclosure of the Invention

### Problems to be Solved by the Invention

However, according to the prior art, special equipment and a great deal of work are required to produce deuterium and tritium as raw materials. Moreover, as for conditions for nuclear fusion reaction, the reaction temperature is very high, and further the apparatus is also very large in scale. Thus, an object of the invention is to provide a ¹³C producing method for yielding ¹³C, which is a nonradioactive and stable isotope of carbon, by use of a commonly used carbon compound as a raw material in the presence of hydrogen and a sulfur compound without generating any radioactive waste.

### Means for Solving the Problems

In order to solve the problems, a first aspect of the invention is a method for producing ¹³C, which is a nonradioactive and stable isotope of carbon, wherein ¹³C is yielded by reaction using a carbon compound as a raw material at 500°C to 1000°C in the presence of hydrogen, a sulfur compound, and a reaction catalyst.

A second aspect of the invention is the method for producing ¹³C according to the first aspect, wherein the reaction catalyst is at least one of a platinum catalyst, a palladium catalyst, and a platinum-palladium catalyst.

A third aspect of the invention is the method for producing ¹³C according to the first or second aspect, wherein the proportion of sulfur contained in the sulfur compound is from 50 ppm by weight to 7% by weight of the carbon compound.

A fourth aspect of the invention is the method for producing ¹³C according to the first or second aspect, wherein the pressure of the hydrogen is from 9.8 × 10⁶ Pa to 22.3 × 10⁶ Pa (100 kg/cm² to 250 kg/cm²).

A fifth aspect of the invention is a method for producing ¹³C_{,} which is a nonradioactive and stable isotope of carbon, wherein ¹³C is yielded by reaction using a carbon compound as a raw material at 500°C to 1000°C in the presence of a mixed gas of hydrogen and an inert gas, a sulfur compound, and a reaction catalyst.

The carbon compound of the invention is roughly classified into gas, liquid and solid forms. Typical examples of the gas include methane, ethane, propane, butane and other hydrocarbons. Typical examples of the liquid include benzene, toluene, naphthalene, anthracene, gasoline, light oil, kerosene, heavy oil, creosote oil, and coal tar. Typical examples of the solid include activated carbon, carbon black, coal, and coke. These may be used alone, or the gas, liquid and solid carbon compounds may be used in the form of any mixture.

The hydrogen as a raw material in the invention may be any hydrogen isotope, such as deuterium (D), which has an atomic nucleus composed of one proton and one neutron, or tritium (T), which has an atomic nucleus composed of one proton and two neutrons, besides hydrogen (H) having an atomic nucleus made of one proton. Most preferred is hydrogen used industrially as an ordinary gas.

In the invention, the reaction of the invention advances also at the time of using an inert gas and hydrogen together.
Typical examples of the inert gas include helium, neon, argon, and other rare gases. Even when hydrogen is diluted, for example, 100 times with He so that the level of the hydrogen gas pressure becomes 1 atmosphere (1013 × 10² Pa), an equivalent reaction rate can be obtained by raising the reaction temperature. From the viewpoint of safety, the use thereof together with an inert gas, which is unreactive with almost all materials, is allowable, and is preferred.

The sulfur compound in the invention may be a compound from which sulfur-containing radicals are generated by the reaction of the invention, and typical examples thereof include inorganic sulfur compounds such as hydrogen sulfide and sulfur dioxide, organic sulfur compounds such as methylmercaptane, methyl sulfide, methyl disulfide and benzothiophene, and a simple sulfur substance. These may be used alone or in a mixture form.

At the time of the reaction, the addition amount of sulfur (pure sulfur content) should be 50 ppm by weight or more of the raw material carbon compound. If the amount is 50 ppm by weight or less, the reaction-advancing rate may be small. Thus, the amount is impractical. Usually, the proportion of sulfur contained in coal tar, creosote oil, heavy oil or the like is 50 ppm by weight or more and 7% by weight or less. An additional amount thereof is unnecessary. In a case where the proportion of sulfur is more than 7% by weight, the reaction is not hindered; however, at room temperature, sulfur may precipitate into a sold form. At this time, sulfur adheres to the inside of a container or a pipe so that an inconvenience is caused, which is not preferred.

As for the reaction temperature and the pressure, the reaction is further promoted as the temperature and the pressure are higher. However, in a closed-type reactor, the upper limit of each of the pressure and the temperature is decided from a restriction based on the raw materials. The pressure of hydrogen in the reaction is preferably from 9.8 × 10⁶ Pa to 22.3 × 10⁶ Pa (100 kg/cm² to 250 kg/cm²). Even if the pressure of hydrogen is less than 9.8 × 10⁶ Pa (100 kg/cm²), the reaction can be advanced when the temperature is sufficiently high. Even when the pressure is 1 atmosphere (1013 × 10² Pa), the reaction is advanced at the same rate as in the case of hydrogen alone having a pressure of 100 atmospheres (1013 × 10⁴ Pa) by raising the temperature.

The reaction temperature is preferably from 500°C to 1000°C, and is more preferably from 600°C to 900°C. If the temperature is lower than 600°C, the reaction is not easily caused unless the pressure of the hydrogen gas is sufficiently high. If the temperature is higher than 900°C, it is difficult to use high-temperature apparatus members for power generation or chemically industrial plants. Thus, the temperature outside the above range is not preferred.

The reaction catalyst is preferably at least one of a platinum catalyst, a palladium catalyst, and a platinum-palladium catalyst. The form of the catalyst is not particularly limited. The catalyst may be a catalyst in a wire gauze form, porous form, powdery form, a composite powder thereof with carbon or alumina, a pellet or platinum black.

The mechanism of causes for the production of ¹³C and the generation of energy obtained by the invention is unclear; however, the mechanism would be the generation of partial reactions represented by the following formulae (1), (2) and (3) resulting from a C-N-O circulating reaction suggested by German physicists, Bethe and Weizsacker, in 1939, as described in the following:

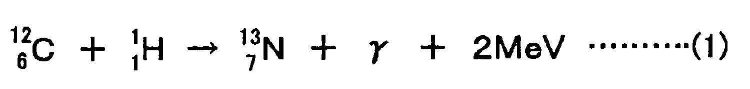

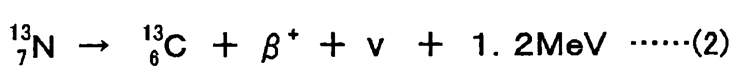

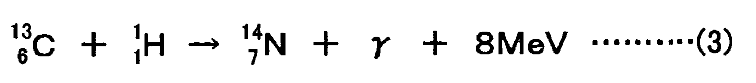

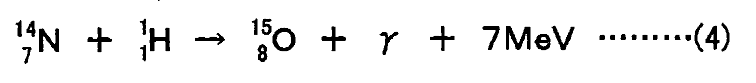

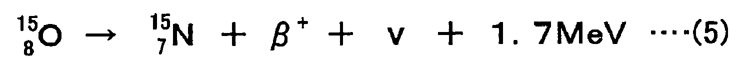

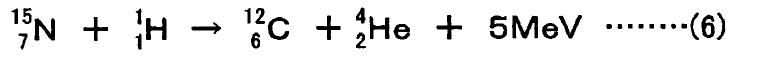

(γ: a γ ray β⁺: a positron beam v: a neutrino)

### Advantageous effects of the invention

According to the invention, ¹³C, which is a nonradioactive and stable carbon isotope, and energy-generation can be yielded by use of a commonly used carbon compound as a raw material in the presence of hydrogen and a sulfur compound. Excessive heat generated by the reaction exhibits a relationship of an exponential increase or decrease relative to the set temperature (absolute temperature); thus, the reaction is easily controlled.

### Brief Description of the Drawings

Fig. 1 is a schematic view of a reactor as an experimental apparatus.
Fig. 2A is a graph showing a change in the temperature of the reactor in Example 1, wherein a sequence 1 shows the internal temperature of its autoclave, and a sequence 2 shows the temperature of the outer wall face of the autoclave; and Fig. 2B is a partially enlarged graph of Fig. 2A.
Fig. 3 is a graph showing a GC-MS analysis result of a product.
Figs. 4 are each a mass spectral analysis result of a peak (2) of ¹³C in Fig. 3.
Fig. 5A is a graph showing a change in the temperature of the reactor in Example 2, wherein a sequence 1 shows the internal temperature of its autoclave, and a sequence 2 shows the temperature of the outer wall face of the autoclave; and Fig. 5B is a partially enlarged graph of Fig. 5A.
Fig. 6A is a graph showing a change in the temperature of the reactor in Example 3, wherein a sequence 1 shows the internal temperature of its autoclave, and a sequence 2 shows the temperature of the outer wall face of the autoclave; and Fig. 6B is a partially enlarged graph of Fig. 6A.
Fig. 7 is a graph showing the relationship between excessive heat generated by a reaction and the internal temperature (absolute temperature).
Fig. 8 is a graph showing the relationship between excessive heat generated by the reaction and the pressure of hydrogen.

### Reference Numerals

1: reactor
2: autoclave
2a: autoclave body
2a1: concave portion
2a2: through hole
2b: autoclave cover
2b1: convex portion
2b2: through hole
3: heater
3a: power source
4: platinum catalyst
5: bolt
6: exhaust valve
7: hydrogen supplying valve
8a and 8b: thermocouple thermometer
9: personal computer
10: gasket
11: carbon compound

### Best Mode for Carrying Out the Invention

With reference to the drawings, an embodiment of the ¹³C producing method according to the invention will be specifically described hereinafter. The invention is not limited by these embodiments. ¹³C yielded by the ¹³C producing method according to the invention can be analyzed by GC-MS (gas chromatography-mass spectrometry) and ¹³C-NMR (nuclear magnetic resonance) analysis.

### Example 1

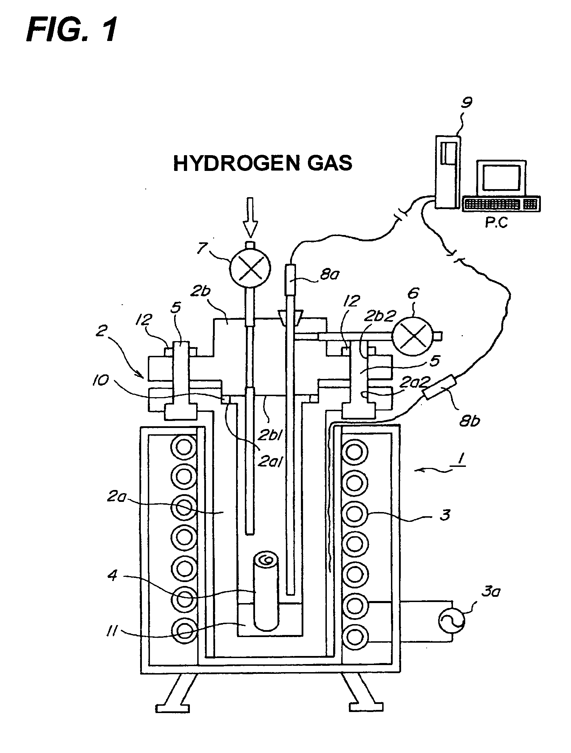

In a reactor 1 illustrated in Fig. 1, a cylindrical autoclave 2 made of INCONEL, having a body 56 mm in outer diameter and 26 mm in inner diameter, and having an inner volume of 88 cc is set in an electrothermal heater 3 connected to a power source 3a, and a carbon compound 11 as a raw material, 12 cc of creosote oil containing a sulfur compound (the proportion of sulfur: 0.07% by weight) and a platinum catalyst 4 in a wire gauze form are inserted in an autoclave body 2a. A convex portion 2b1 of an autoclave cover 2b is then fitted into a concave portion 2a1 in the autoclave body 2a to interpose a metallic gasket 10 therebetween. Six bolts 5 are inserted into six through holes 2a2 and 2b2 made in six spots in the periphery of each of the autoclave body 2a and the autoclave cover 2b, and nuts 12 are screwed and fastened onto the bolts 5 to fix the autoclave cover 2b to the autoclave body 2a.

Thereafter, a hydrogen supplying valve 7 is opened to supply hydrogen gas into the autoclave 2 while an exhaust valve 6 is being opened for several minutes. Thus, the air remaining in the autoclave 2 is replaced by hydrogen gas. Thereafter, the exhaust valve 6 is closed to raise the pressure of the hydrogen gas in the autoclave 2 up to 100 atmospheres (1013 × 10⁴ Pa), thereby filling hydrogen into the autoclave 2. The hydrogen supplying valve 7 is then closed. From the power source 3a, an electric current is sent to the heater 3, in which the autoclave 2 in which the hydrogen gas is air-tightly enclosed is set, so as to heat the autoclave 2 until the internal temperature thereof turns to 540°C. The electric current conduction to the heater 3 is stopped.

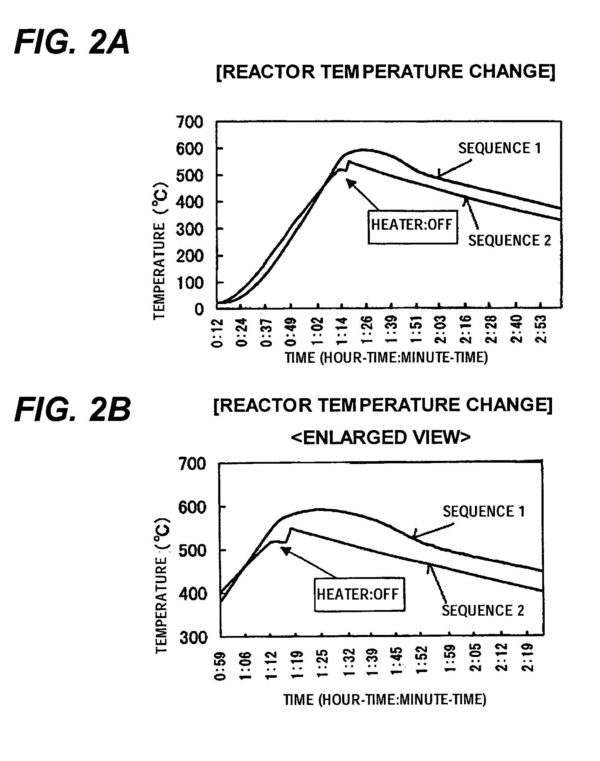

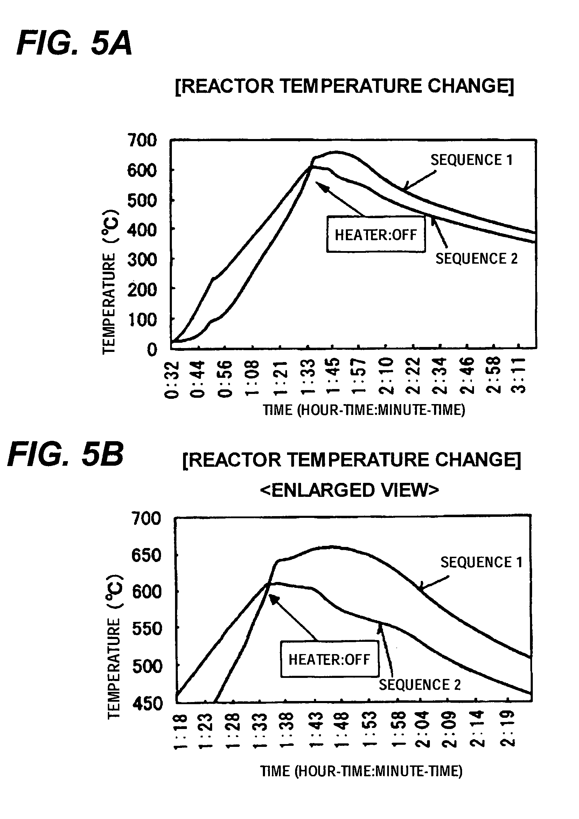

In Fig. 1, reference numerals 8a and 8b denote thermocouple thermometers. The thermocouple thermometer 8a is a meter that is set in the autoclave 2 and is capable of measuring the temperature of the inside of the autoclave 2, and the thermocouple thermometer 8b is a meter that is set on the outer wall face of the autoclave 2 and is capable of measuring the temperature of the outer wall face. Temperature data measured with the thermocouple thermometers 8a and 8b are sent to a personal computer 9 and then recorded as shown in Figs. 2 and 5.

Temperature measurement results of the inside and the outside of the autoclave 2 measured with the thermocouple thermometers 8a and 8b are shown in Figs. 2. In Figs. 2, each sequence 1 shows the internal temperature of the autoclave 2 measured with the thermocouple thermometer 8a, and each sequence 2 shows the temperature of the outer wall face of the autoclave 2 measured with the thermocouple thermometer 8b. As shown in Figs. 2, observed was a phenomenon that after several minutes from the stop of the heating with the heater 3, the temperatures of the individual sides of the autoclave 2 rose suddenly. The temperature of the autoclave 2 was returned to room temperature, and gas remaining in the autoclave 2 was collected. Three days later, components of the gas were analyzed by GC-MS (gas chromatography-mass spectrometry).

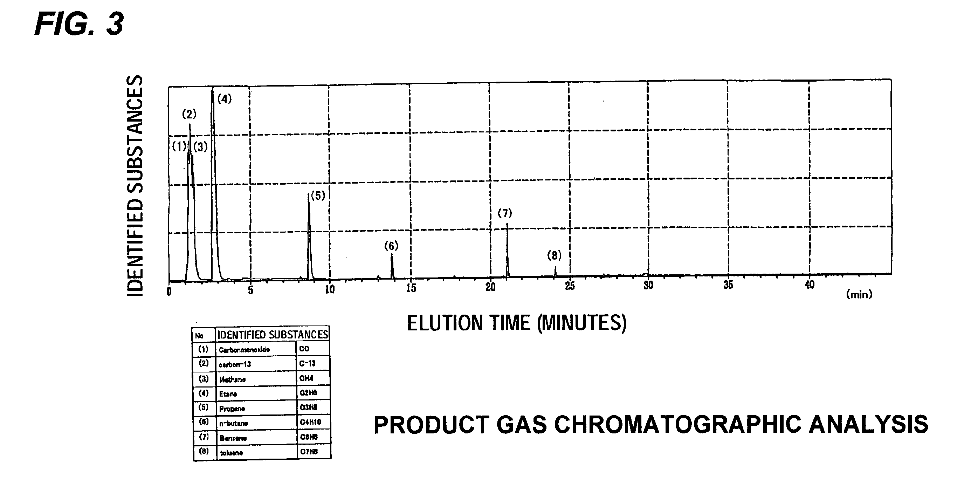

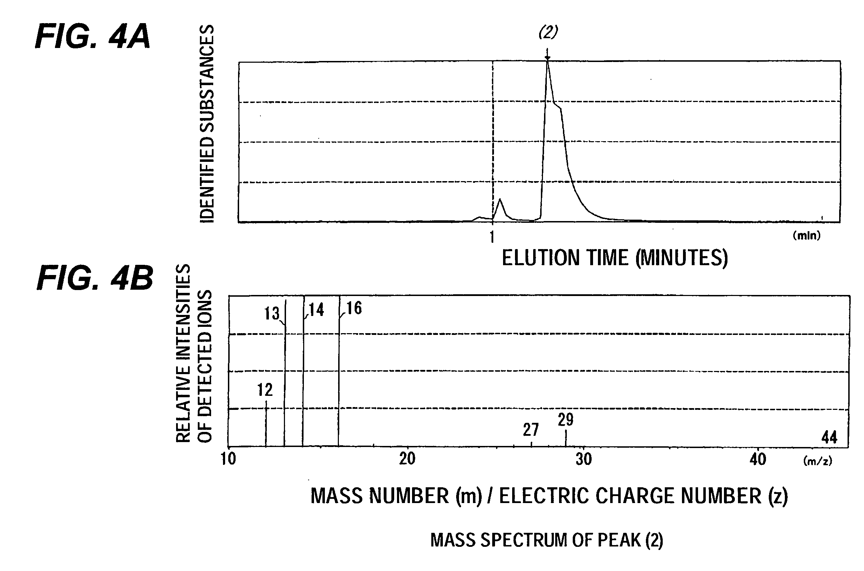

The results obtained by the analysis by the gas chromatography are shown in Fig. 3. In Fig. 3, the transverse axis represents the elution time (minutes) of each component, and the vertical axis represents the detected intensity. As shown in Fig. 3, it was found that the gas components were as follows: CO (carbon monooxide) denoted by (1) in Fig. 3; C-13 (¹³C), which is a component denoted by (2) in Fig. 3, according to the result of the mass spectrometry in Fig. 4; and carbon compounds of CH₄ (methane), C₂H₆ (ethane), C₃H₈ (propane), C₄H₁₀ (butane), C₆H₆ (benzene) and C₇H₈ (toluene) denoted by (3) to (8) in Fig. 3, respectively.

Fig. 4A shows a result near the peak (2) in Fig. 3 according to the gas chromatography, and Fig. 4B shows the mass spectral analysis result of the peak (2). In Fig. 4B, the transverse axis represents the mass number/the electric charge number (m/z), and the vertical axis represents relative intensities of detected ions. As illustrated in Fig. 4, ¹³C, which is a nonradioactive and stable carbon isotope having a mass number of 13, was ascertained.

The total weight of a solid-carbon-form mass collected from the inside of the autoclave 2 and a very small volume of a liquid was substantially equivalent to that of the filled creosote oil.

In Fig. 2, the internal temperature of the autoclave 2 represented by the sequence 1 and measured with the thermocouple thermometer 8a is higher than the temperature of the outer wall face of the autoclave 2 represented by the sequence 2 and measured with the thermocouple thermometer 8b; therefore, it is understood that an exothermic reaction based on nuclear fusion is caused inside the autoclave 2.

### Example 2

The autoclave/heating apparatus made of the reactor 1 used in Example 1 was used to insert 12 cc of coal tar having a sulfur compound (the proportion of sulfur: 3% by weight) as the raw material carbon compound 11 into the autoclave 2 instead of creosote oil. According to the same operations as in Example 1 except the above, hydrogen gas was air-tightly enclosed therein to give a pressure of 100 atmospheres (1013 × 10⁴ Pa), the same platinum catalyst 4 was used to make the same operations, and then the autoclave 2 was heated with the heater 3 to heat the internal temperature of the autoclave 2 from room temperature to 600°C. The internal temperature of the autoclave 2 rose up to at highest 660°C, as illustrated in Figs. 5.

After the end of the reaction, 10 cc of a solid-carbon-form mass and a very small volume of a liquid remained in the autoclave 2. In the same way as in Example 1, gas component analysis was made by GC-MS (gas chromatography-mass spectrometry). As a result, ¹³C, which is a nonradioactive and stable carbon isotope having a mass number of 13, was detected.

In Fig. 5 also, the internal temperature of the autoclave 2 represented by the sequence 1 and measured with the thermocouple thermometer 8a is higher than the temperature of the outer wall face of the autoclave 2 represented by the sequence 2 and measured with the thermocouple thermometer 8b; therefore, it is understood that an exothermic reaction based on nuclear fusion is caused inside the autoclave 2.

As described above, ¹³C can be yielded by use of the carbon compound 11 as a raw material at 500°C to 1000°C in the presence of hydrogen, a sulfur compound and the platinum catalyst 4 as a reaction catalyst. It is sufficient that the proportion of sulfur in the sulfur compound is from 50 ppm by weight to 7% by weight of the carbon compound 11, and the pressure of hydrogen is from 9.8 × 10⁶ Pa to 22.3 × 10⁶ Pa (100 kg/cm² to 250 kg/cm²) .

### Example 3

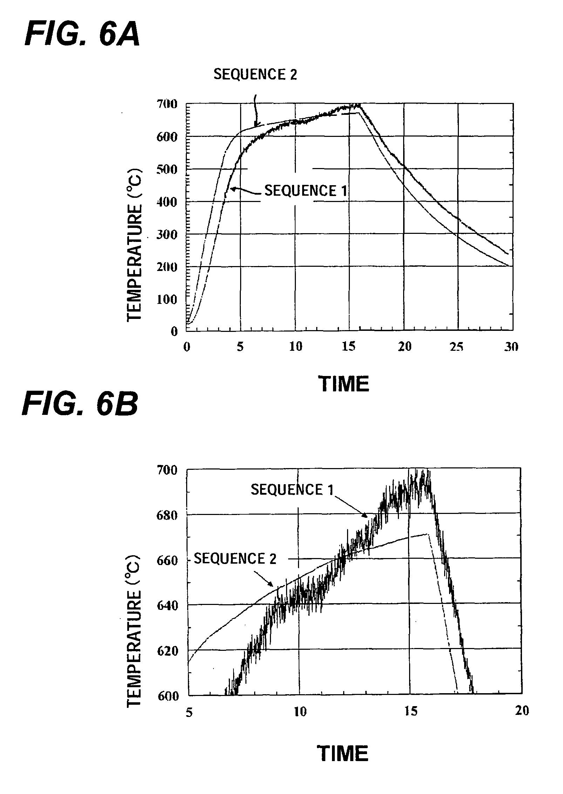

Into the autoclave 2 of the same reactor 1 as in Example 1 were put 1 cc of creosote oil and the platinum catalyst 4. According to the same operations as in Example 1, hydrogen gas was made into 1 atmosphere (1013 × 10² Pa) and helium gas was made into 70 atmospheres (7091 × 10³ Pa), and the input of the heater 3 was adjusted to set the internal temperature of the autoclave 2 to 660°C. As illustrated in Figs. 6A and 6B, even after the internal temperature of the autoclave 2 arrived at 660°C, the internal temperature of the autoclave 2 rose. After about 4 hours from the time when the heater 3 was turned on, the temperature turned to 690°C, and a temperature rise (excessive heat) of 30°C was observed.

### Examples 4 to 31

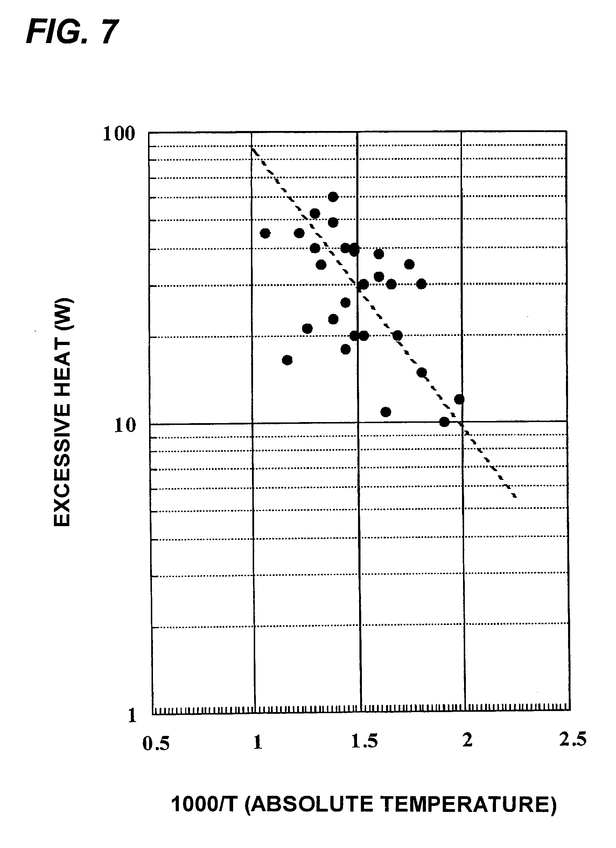

The same reactor 1 and creosote oil as in Example 3 were used to measure excessive heat under each of 12 temperature conditions using hydrogen gas alone (35 atmospheres (355 × 10⁴ Pa)), and calculate the watt number of the excessive heat from the retention period thereof. The watt number refers to the joule number generated per unit time. As a result, as illustrated in Fig. 7, the watt number of the excessive heat increased exponentially relative to the absolute temperature (T) of the heater 3 applied by the heater 3. It is acknowledged from this result that Arrhenius' equation is satisfied about this reaction. Arrhenius' equation is as follows: in ordinary chemical reaction, as illustrated in Fig. 7, the relationship between the reaction rate (excessive heat) and the absolute temperature is a linear relationship between the reciprocal number of the absolute temperature and the logarithm of the excessive heat, and the linear expression represented by this linear line is referred to as Arrhenius' equation.

In Fig. 7, T represented by the transverse axis corresponds to the absolute temperature (K), and 0°C is equal to 273 K. The value of 1000/T is represented as a value obtained by multiplying the reciprocal number of the absolute temperature by 1000. For example, at 600°C, the value of 1/T is 0.001145...; when this value is multiplied by 1000, the resultant is 1.145....

### Example 32 to 68

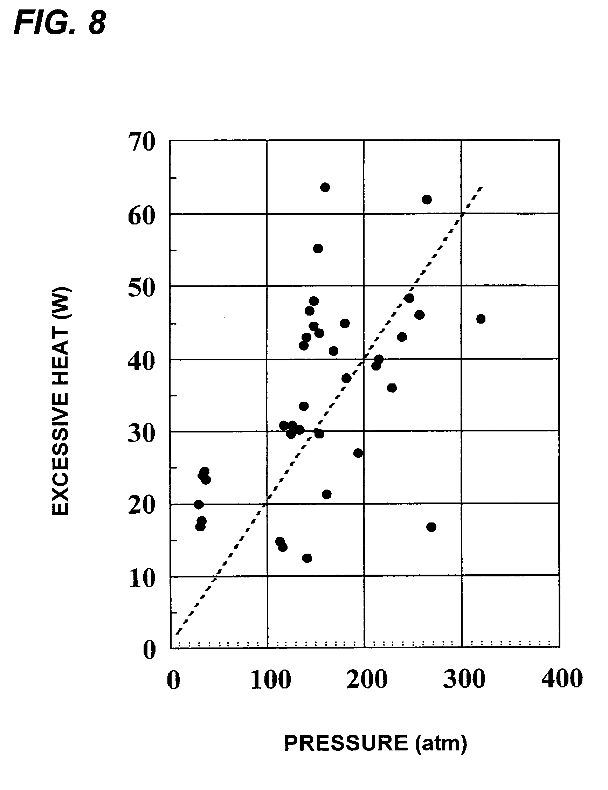

The same reactor 1 and creosote oil as in Example 3 were used to measure excessive heat in the temperature range of 250°C to 655°C under each of 35 pressure conditions using hydrogen gas alone, and calculate the watt number of the excessive heat from the retention period thereof. As a result, the excessive heat increased in proportion to the pressure of the gas, as illustrated in Fig. 8.

### Industrial Applicability

The invention provides a ¹³C producing method for yielding ¹³C, which is a nonradioactive and stable isotope of carbon, by use of a commonly used carbon compound as a raw material in the presence of hydrogen and a sulfur compound without generating any radioactive waste.

## Claims

1. A method for producing ¹³C, which is a nonradioactive and stable isotope of carbon, wherein ¹³C is yielded by reaction using a carbon compound as a raw material at 500°C to 1000°C in the presence of hydrogen, a sulfur compound, and a reaction catalyst.

2. The method for producing ¹³C according to claim 1, wherein the reaction catalyst is at least one of a platinum catalyst, a palladium catalyst, and a platinum-palladium catalyst.

3. The method for producing ¹³C according to claim 1 or 2, wherein a proportion of sulfur contained in the sulfur compound is from 50 ppm by weight to 7% by weight of the carbon compound.

4. The method for producing ¹³C according to claim 1 or 2, wherein a pressure of the hydrogen is from 9.8 × 10⁶ Pa to 22.3 × 10⁶ Pa (100 kg/cm² to 250 kg/cm²) .

5. A method for producing ¹³C, which is a nonradioactive and stable isotope of carbon, wherein ¹³C is yielded by reaction using a carbon compound as a raw material at 500°C to 1000°C in the presence of a mixed gas of hydrogen and an inert gas, a sulfur compound, and a reaction catalyst.
